Europäisches Patentamt

European Patent Office

Office européen des brevets

(11) Veröffentlichungsnummer: **0 366 955**
**A1**

(12) **EUROPÄISCHE PATENTANMELDUNG**

(21) Anmeldenummer: 89118332.9

(22) Anmeldetag: 03.10.89

(51) Int. Cl.⁵: **B67B 5/06 , B67B 3/062 , B65G 59/10**

(30) Priorität: 03.11.88 DE 3837391

(43) Veröffentlichungstag der Anmeldung:
**09.05.90 Patentblatt 90/19**

(84) Benannte Vertragsstaaten:
**AT BE CH ES FR GR IT LI LU**

(71) Anmelder: **OTTO SICK GMBH**
**Bundesstrasse 3 Haus Nr. 6**
**D-7830 Emmendingen-Mundingen(DE)**

(72) Erfinder: **Kunzweiler, Konrad**
**Fischerstrasse 6**
**D-7831 Rheinhausen 2(DE)**
Erfinder: **Fahrner, Herbert**
**Neue Strasse 8**
**D-7832 Kenzingen(DE)**

(74) Vertreter: **Münzhuber, Robert, Dipl.-Phys. et al**
**Patentanwalt Rumfordstrasse 10**
**D-8000 München 5(DE)**

(54) **Aufsetzvorrichtung für Drahtverschlüsse.**

(57) Es wird eine Aufsetzvorrichtung zum Überführen von Drahtverschlüssen (14) für verkorkte Flaschen, insbesondere Sektflaschen, von einem Drahtverschluß-Stangenmagazin (13) auf Aufsetzkacheln (28) einer in eine Flaschen-Verdrahtungsmaschine führende Förderkette (15) verbessert. Die Aufsetzvorrichtung weist einen eine Vereinzelungseinrichtung enthaltenden Abgabekopf (10), der die vereinzelten Drahtverschlüsse (14) auf eine Überführungseinrichtung (11) gibt, und eine Abnahmeeinrichtung (12) auf, welche die Drahtverschlüsse (14) von der Überführungseinrichtung (11) wieder abnimmt und auf die Kacheln (28) setzt, wobei die Vereinzelungseinrichtung durch Hubzylinder betätigbare Drahtverschluß-Halteelemente und die Überführungseinrichtung ein umlenkbares Förderelement mit schwenkbar angelenkten Magnet-Aufnahmetrichtern (20) aufweist, die im Bereich des Abgabekopfs einer gesteuerten Vorauseilungs- und Nacheilungs-Schwenkbewegung unterworfen werden. Die Vereinzelungseinrichtung besteht dabei aus einem einzigen Hubzylinder (30), zwei vom Hubzylinder betätigten Schiebern (31, 32) und zwei, die Schieber miteinander verbindenden, Haltenadeln (35) tragenden Knickhebeln (33, 34). Das umlaufende Förderelement der Überführungseinrichtung ist eine Endloskette (15) mit im wesentlichen dreieckförmiger Umlaufbahn, deren Aufnahmetrichter (20) an Schwenkachsen (21) mit beidseits exzentrisch angeordneten Kurvenrollen (25, 26) angelenkt sind, wobei abwechselnd eine Kurvenrolle jeder Schwenkachse in eine ihr zugeordnete Steuerkurvennut (23a, 24a) eingreift. Die Abnahmeeinrichtung weist über den Aufsetzkacheln (28) angebrachte Niederhalter-Bleche (27) auf, wobei im Übergabebereich zwischen. Trichterkette (15) und Kachelkette ein sich öffnender Anstellwinkel besteht.

FIG.1

## Aufsetzvorrichtung für Drahtverschlüsse

Die Erfindung betrifft eine Aufsetzvorrichtung zum Überführen von Drahtverschlüssen für verkorkte Flaschen, insbesondere Sektflaschen, von einem Drahtverschluß-Stangenmagazin auf Aufsetzkacheln einer in eine Flaschen-Verdrahtungsmaschine führende Förderkette gemäß. dem Oberbegriff des Patentanspruchs 1. Derartige Aufsetzvorrichtung sind seit langem bekannt und auf dem Markt.

Für automatische Flaschenfüll- und -verschließ-Strassen werden heute immer höhere Taktgeschwindigkeiten gefordert. Dies setzt aber voraus, daß alle in der Anlage befindlichen Vorrichtungen solche erhöhte Taktgeschwindigkeiten von beispielsweise 25 000 Flaschen pro Stunde zu erbringen vermögen, was gerade bei den bekannten Aufsetzvorrichtungen zu Schwierigkeiten führt, weil der Abgabekopf, insbesondere dessen Vereinzelungsvorrichtung, die Überführungseinrichtung und/oder die Abnahmeeinrichtung solchen Geschwindigkeiten nicht gewachsen ist.

Aufgabe der vorliegenden Erfindung ist es deshalb, die Aufsetzvorrichtung der eingangs erwähnten Art so zu verbessern, daß sie in allen ihren Elementen und somit insgesamt eine sehr hohe Arbeitsgeschwindigkeit gewährleistet und dies bei großer Funktionssicherheit. Die Lösung dieser Aufgabe ergibt sich aus den kennzeichnenden Merkmalen des Patentanspruchs 1.

Besonders zweckmäßige Ausgestaltungen der Erfindung sind in den Unteransprüchen gekennzeichnet.

Auf der Zeichnung ist eine Ausführungsform der Erfindung beispielsweise dargestellt. Es zeigen:

Fig. 1 eine schematische Seitenansicht der Vorrichtung, teilweise geschnitten,

Fig. 2 einen Vertikalschnitt durch die Vorrichtung von Fig. 1 in um 90° verdrehter Position,

Fig. 2A einen vergrößerten Ausschnitt aus Fig. 2,

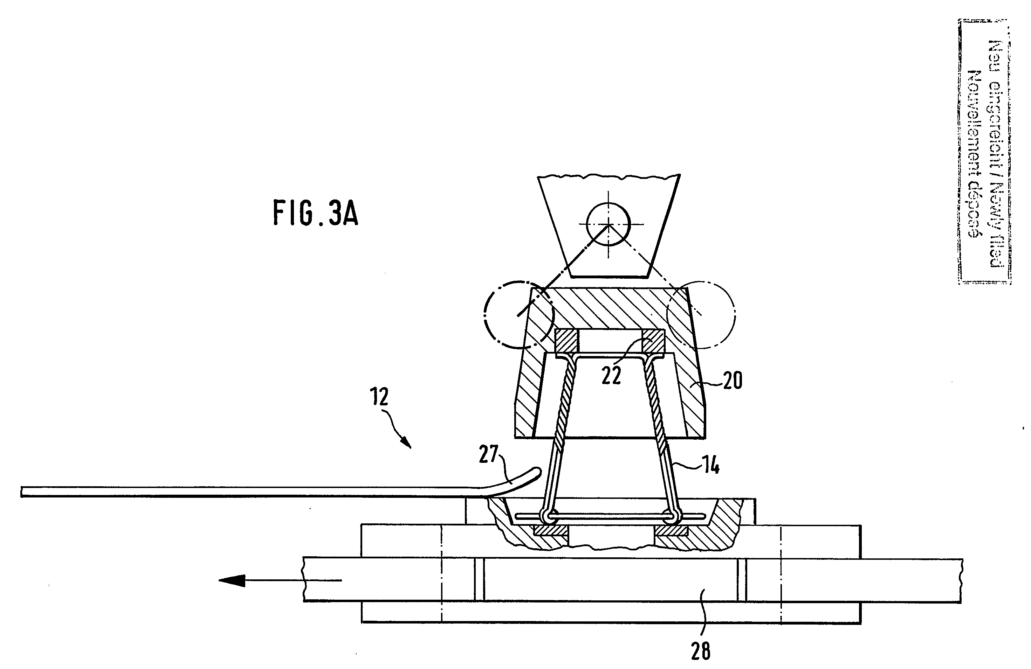

Fig. 3A und 3B eine schematische Seitenbzw. Vorderansicht, teilweise im Schnitt, der Abnahmeeinrichtung der Vorrichtung nach Fig. 1,

Fig. 4 eine schematische Darstellung, teilweise im Schnitt, der Vereinzelungseinrichtung des Abgabekopfs der Vorrichtung von Fig. 1,

Fig. 4A und 4B schematische Draufsichten zur Erläuterung der Funktionsweise der Einrichtung von Fig. 4, wobei Fig. 4A die Ruheposition und Fig. 4B die Arbeitsposition darstellt, und

Fig. 5 eine schematische Schnittansicht der Vereinzelungsvorrichtung und des Aufnahmetrichters zur Erläuterung einer Abwandlungsform des Aufnahmetrichters.

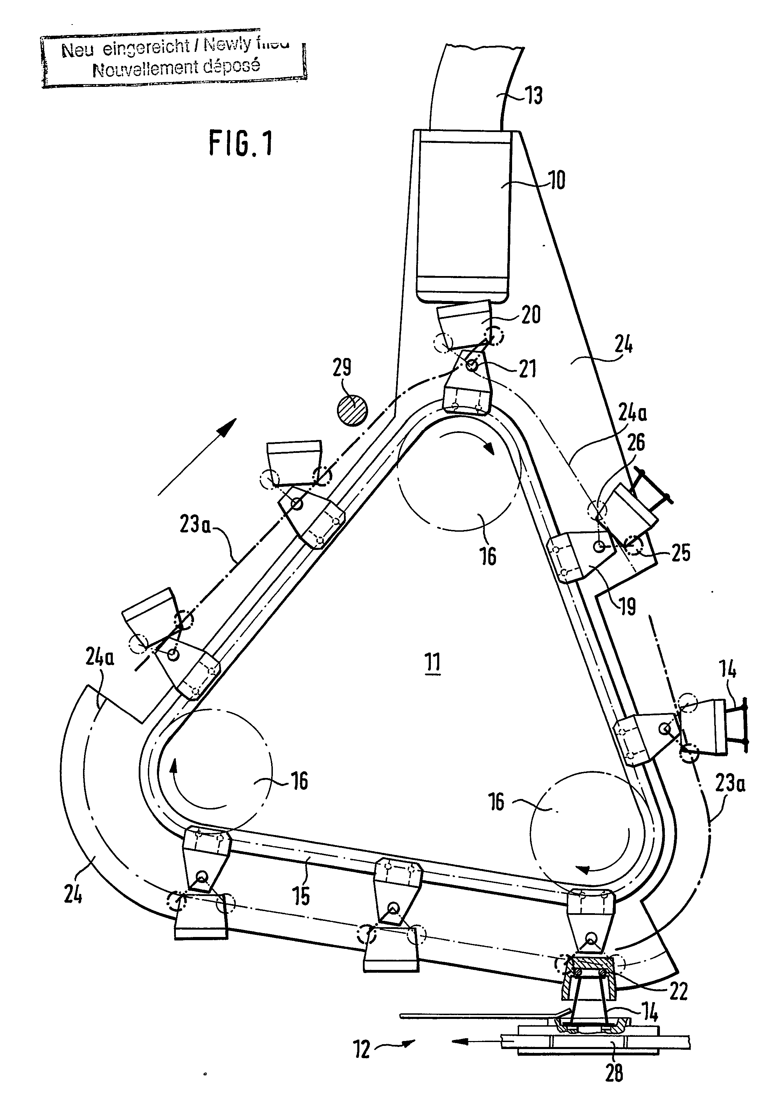

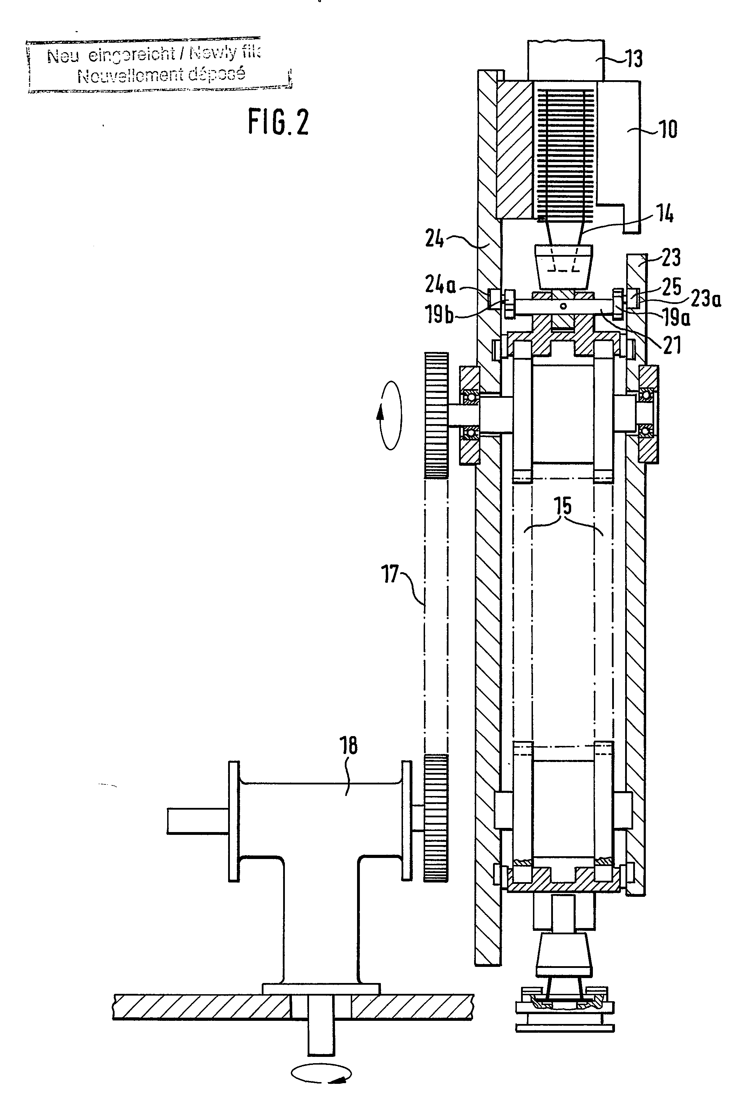

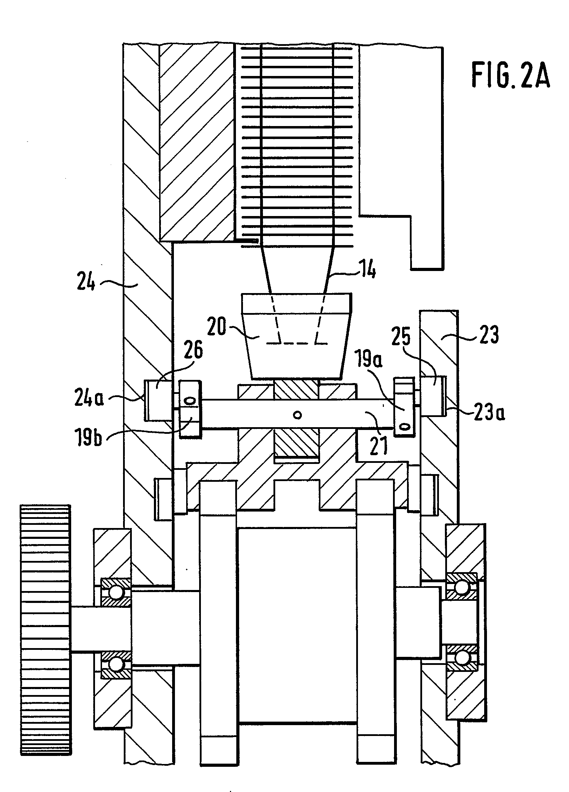

Anhand der Figuren 1 und 2 soll zunächst die Aufsetzvorrichtung in ihrer Gesamtheit beschrieben werden. Die Vorrichtung besteht aus drei Einrichtungen, nämlich einem Abgabekopf 10, einer im ganzen mit 11 bezeichneten Übertragungseinrichtung und einer Abnahmeeinrichtung 12. Der Abgabekopf 10 entnimmt aus einem Drahtverschluß-Magazin 13 nacheinander einzelne Drahtverschlüsse 14 und gibt diese an die Übertragungseinrichtung 11 weiter. Die den wesentlichen Bestandteil des Abgabekopfs 10 darstellende Vereinzelungseinrichtung wird später noch im einzelnen beschrieben werden.

Die Übertragungseinrichtung 11 weist eine endlose Kette 15 auf, die über drei Kettenrollen 16 läuft, wobei die oberste Kettenrolle 16 eine Antriebsrolle darstellt, die ihrerseits über einen Riementrieb 17 von einem Getriebe 18 angetrieben wird. Die Bahn der Kette 15 hat im wesentlichen die Form eines abgerundeten gleichseitigen Dreiecks, dessen Grundlinie gegenüber der Horizontalen eine geringe Schräge aufweist. Die Kette 15 ist in gleichmäßigen Abständen mit Halterungselementen 19 für Aufnahmetrichter 20 versehen, die mittels einer Schwenkachse 21 schwenkbar am zugehörigen Halterungselement 19 angelenkt sind und in ihrer Aufnahmeöffnung einen Ringmagneten 22 aufweisen. Auf beiden Seiten der Kette 15 befindet sich eine gehäusefeste Platte 23 bzw. 24, wobei die Platte 23 auf ihrer der Kette 15 zugewandten Seite mit einer Kurvennut 23a, die Platte 24 mit einer Kurvennut 24a versehen ist. Die beiden Kurvennuten 23a, 24a dienen zum Steuern der Schwenkbewegung der Aufnahmetrichter 20, zu welchem Zweck an deren Schwenkachsen 19 beidends über Hebel 19a bzw. 19b Kurvenrollen 25 bzw. 26 angebracht sind, die in den zugehörigen Kurvennuten 23a bzw. 24a gleiten, wie dies am besten aus dem vergrößerten Ausschnitt der Fig. 2A ersichtlich ist. Der Verlauf der Kurvennuten 23a, 24a ist aus Fig. 1 ersichtlich, wobei die zugehörigen Platten 23, 24 sich nur soweit erstrecken wie die zugehörigen Kurvennuten 23a, 24a; für die Kurvennut 23a und die zu gehörige Platte 23 ist dies in Fig. 1 deutlich gezeichnet, für die Kurvennut 24a bzw. deren Platte 24, die sich in Fig. 1 über der Zeichenebene befinden, gilt dies entsprechend. Wie am besten in Fig. 1 aus der rechten unteren Seite der Übertragungseinrichtung ersichtlich, besteht eine gewisse Überlappung zwischen den beiden Kurvennuten 23a, 24a und damit auch zwischen den Platten 23, 24. Es ist verständlich, daß sich aufgrund dieser Anordnung stets eine der beiden Kurvennuten 23a, 24a in einer Kurvennut (23a oder 24a) befindet, lediglich an den beiden Übergangsstellen für kurze Zeit beide Kurvenrollen in Eingriff stehen.

Die Abnahmeeinrichtung 12 besteht im wesentlichen aus zwei Niederhalterblechen, deren Anordnung und Form am besten aus den vergrößerten Ausschnittzeichnungen 2B und 2C ersichtlich ist. Die beiden Bleche 27 befinden sich unmittelbar über den - nicht Gegenstand der Erfindung darstellenden - Kacheln 28, die auf einer nicht-gezeichneten Förderkette angeordnet sind, die sich horizontal mit derselben Geschwindigkeit wie die Kette 15 bewegt. Die Kacheln 28 werden durch ihre Förderkette in bekannter Weise einer - ebenfalls nicht Gegenstand der Erfindung darstellenden - Einrichtung zum Aufsetzen der Drahtverschlüsse auf die zu verschliessenden Flaschen zugeführt.

Befindet sich ein Aufnahmetrichter 20 unter dem Abgabekopf 10, dann entlässt dieser einen vereinzelten Drahtverschluß 14, der dann in den darunter befindlichen Trichter 20 fällt und durch dessen Magnetring 22 festgehalten wird. Im unteren Totpunkt der Kette 15 taucht dann der an dieser Stelle vertikal nach unten hängende Drahtverschluß 14 in die Öffnung der darunter befindlichen Kachel 28 und wird durch die sich mit der Kachel 28 mitbewegenden Bleche 27 in deren Öffnung festgehalten, wohingegen der Aufnahmetrichter 20 sich infolge der erwähnten Schräge der Grundlinie der Kurvenbahn der Kette 15 sich kontinuierlich nach oben vom Drahtverschluß 14 abhebt. Wesentlich ist nun zum einen die Bewegung der Aufnahmetrichter 20 im Bereich unterhalb des Abgabekopfs 10. Bei der Annäherung des Trichters 20 an die Stelle unterhalb des Abgabekopfs 20, die außerdem die höchste Stelle der Bahn der Kette 15 darstellt, greift, wie aus Fig. 1 ersichtlich, die Kurvenrolle 26 in die Kurvennut 24a ein, mit der Folge einer Winkelstellung des Trichters 20 in Voreil-Richtung; bei Erreichung der Stelle unterhalb des Abgabekopfs 10 übernimmt dann die Kurvenrolle 25, gleitend in der Kurvennut 23a, die Steuerung des Trichters 20, derart, daß dieser in Nacheil-Richtung geschwenkt wird. Die Folge ist, daß für den Übergang des Drahtverschlusses vom Abgabekopf 10 in den Aufnahmetrichter 20 eine verlängerte Zeitspanne zur Verfügung steht, der Übergabevorgang also einwandfrei durchführbar ist, auch wenn die Antriebsgeschwindigkeit der Kette 15 sehr hoch ist. Bei Erreichung des unteren Totpunkts übernimmt dann wieder die Kurvenrolle 26 die Schwenksteuerung des Trichters 20, derart, daß dieser über eine gewisse Förderstrecke exakt vertikal nach unten weist bzw. kontinuierlich geringfügig in Förderrichtung der Kacheln 28 mitschwenkt, womit die Übergabe des Drahtverschlusses 14 vom Trichter 20 in die Kacheln 28 wesentlich erleichtert wird, d.h., auch hier mit einer hohen Fördergeschwindigkeit gearbeitet werden kann.

Die erwähnte Schwenksteuerung der Aufnahmetrichter 20 könnte theoretisch - zumindest bei niedrigeren Umlauf- bzw. Fördergeschwindigkeiten - auch nur durch eine Kurvenrolle an der Schwenkachse und damit auch nur eine Kurvennut erreicht werden. Eine tatsächlich exakte und sichere Steuerung ist jedoch nur dann gewährleistet, wenn die Rolle im Nachlauf zur gesteuerten Schwenkwelle ist. Weil in diesem Fall, besonders im Bereich der Übergabe vom Abgabekopf zum Aufnahmetrichter, der Drehwinkelbereich sehr groß ist und nur oberhalb der Kette die Steuernut angebracht werden kann, kann dies nur durch zwei Kurvenrollen und zwei Kurvennuten erreicht werden. Die Steuernut-Abschnitte sind dabei so ausgelegt, daß entsprechend der erforderlichen Winkellage des Aufnahmetrichters 20 diejenige Kurvenrolle die Ausrichtung des Trichters übernimmt, welche im Nachlauf ist. Die Übergabe der Steuerposition von einer Rolle zur anderen Rolle geschieht dabei durch die erwähnte Überlappung der Kurvennuten an den Übergabestellen stoßfrei. Diese Stoßfreiheit ist aber auch durch die erwähnten Maßnahmen bei der Übergabe der Drahtverschlüsse 14 vom Trichter 20 auf die Kacheln 28 gewährleistet. Zur Erzielung einer exakten Synchronisation zwischen Abgabekopf 10, Übertragungseinrichtung 11 und Abnahmeeinrichtung 12 ist ein Näherungsinitiator 29 vorgesehen, der die Abgabe der Drahtverschlüsse durch den Abgabekopf 10 in Abhängigkeit von der Annäherung eines Trichters 20 steuert, wobei dieser Annäherungsinitiator zweckmäßigerweise mit der erwähnten Aufsetzmaschine in Schaltverbindung steht, derart, daß er außer Betrieb tritt, wenn keine zu verschliessende Flasche ankommt.

Erprobungen haben ergeben, daß die oben beschriebene Vorrichtung in der Lage ist, einem Arbeitstakt von 25 000 Flaschen und darüber gerecht zu werden, und dies in äußerst funktionssicherer Weise.

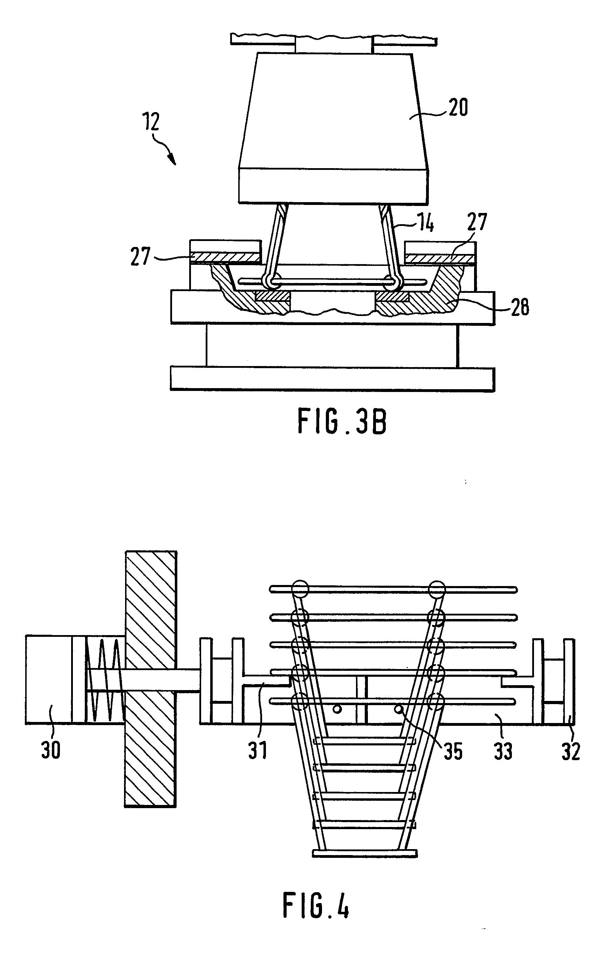

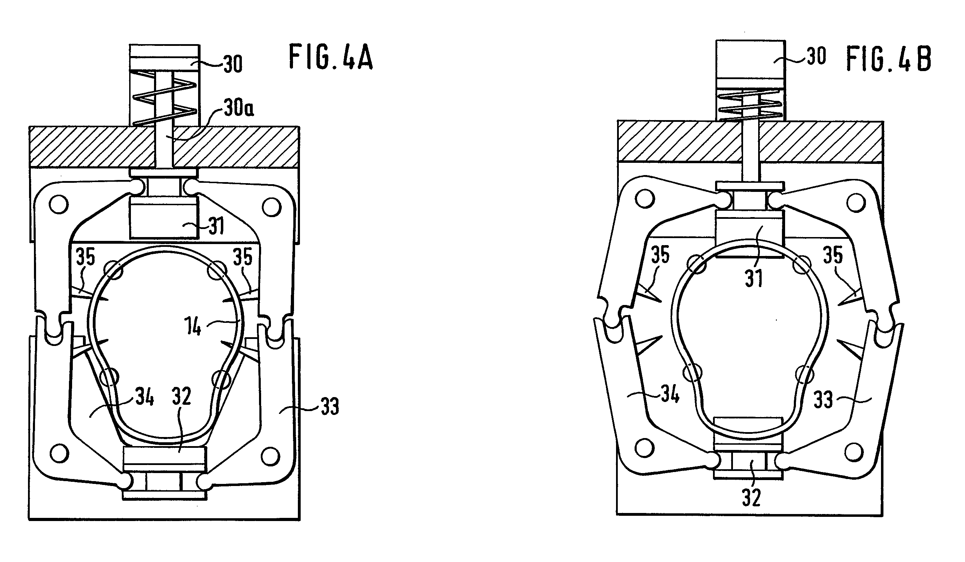

Wesentlich ist nun aber noch, daß auch der Abgabekopf 10 den erwähnten Taktgeschwindigkeiten sicher zu folgen vermag, insbesondere dessen Vereinzelungseinrichtung derartige Geschwindigkeiten zuläßt. Erreicht wird dies mit der in den Fig. 4, 4A und 4B dargestellten Vereinzelungseinrichtung.

Die Vereinzelungseinrichtung besteht aus einem Pneumatikzylinder 30, zwei einander gegenüberstehenden Schiebern 31,32, zwei Knickhebeln 33,34 und vier Nadeln 35. Die beiden Schieber 31,32 stehen einander gegenüber und sind miteinander durch die Knickhebel 33,34 verbunden, die mit ihren Außenenden in den Schiebern verschiebbar gelagert sind. Die mittig ein Gelenk aufweisenden Knickhebel 33,34 tragen die Nadeln 35.

Der Schieber 31 ist mit der Kolbenstange 30a des Zylinders 30 verbunden. In der in Fig. 4A dargestellten Ruheposition liegt der unterste der Drahtverschlüsse 14 des im Abgabekopf 10 befindlichen unteren Endes der Drahtverschluß-Stange auf den vier an den Hebeln 33,34 befestigten Nadeln 35 auf. Die Schieber 31,32 befinden sich in einer Höhe zwischen den beiden untersten Drahtverschlüssen der Drahtverschluß-Stange, jedoch mit seitlichem Abstand davon. Wird nun gemäß Fig.4B der Zylinder 30 ausgefahren, dann werden die beiden Schieber 31,32 aufeinander zu bewegt und greifen zwischen die beiden untersten Verschlüsse. Zugleich werden durch die Schieberbewegung die Knickhebel nach außen geknickt, so daß die Nadeln 35 sich zurückziehen und den untersten Drahtverschluß freigeben, der somit nach unten in den Aufnahmetrichter 20 fällt. Der nachfolgende Drahtverschluß kann dabei nicht nach unten fallen, weil er durch die Schieber 31,32 festgehalten wird. Beim Rückhub des Zylinders 30 werden dann die Schieber 31,32 zurückgezogen und die Nadeln zugleich zurückgeschwenkt, womit der jetzt unterste Drahtverschluß auf die Nadeln 35 fällt. Das wesentliche ist, daß die Nadeln und Schieber von einem einzigen pneumatischen Zylinder betätigt werden, bei dessen aktivem Hub ein Verschluß freigegeben und bei dessen Rückhub der nächstfolgende Verschluß in Vorbereitungsstellung gebracht wird. Durch diese Kombination von Funktionen im selben Arbeitstakt des Pneumatikzylinders ist es möglich, die Vereinzelungsgeschwindigkeit derart zu steigern, daß die vorab erwähnten Arbeitsgeschwindigkeiten der Überführungs- und der Abgabeeinrichtung 11, 12 erreicht werden, die gesamte Aufsetzvorrichtung somit mit der erwähnten Geschwindigkeit gefahren werden kann.

Selbstverständlich ist die Erfindung nicht auf die dargestellte Ausführungsform beschränkt, sondern es sind dieser gegenüber zahlreiche Abwandlungen möglich, ohne den Bereich der Erfindung zu verlassen. Dies betrifft insbesondere die Anzahl der Nadeln der Vereinzelungseinrichtung, die Zahl und Form der Aufnahmetrichter der Überführungseinrichtung und die Größe des Winkels zwischen der Grundlinienbahn der Kette der Überführungseinrichtung und der Förderkette der Kacheln, wobei es im letzteren Fall lediglich auf das Vorhandensein einer Schrägstellung zwischen Trichterkette und Kachelkette ankommt, unabhängig davon, ob nun - wie gezeichnet - die Kachelkette oder die Trichterkette horizontal verläuft. Schließlich ist es auch möglich, den Übergabevorgang von den Trichtern zu den Kacheln noch dadurch zu verbessern, daß in die Kachelöffnungen kleine Magnete eingesetzt sind.

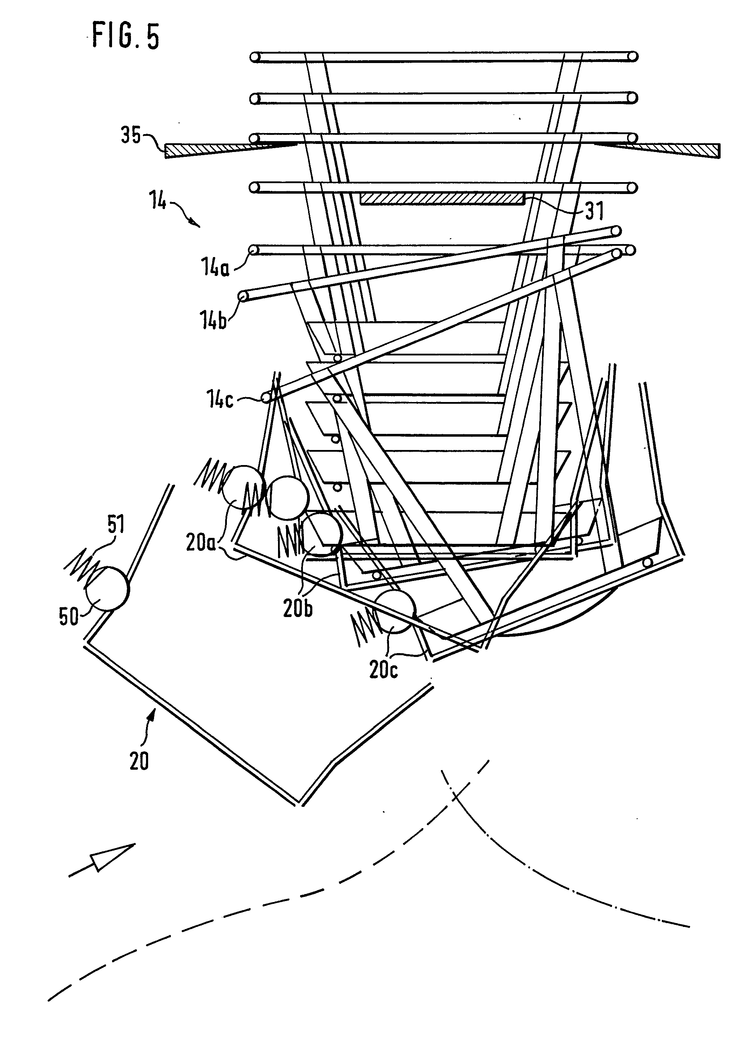

Eine wesentliche Weiterbildung der Erfindung betrifft schließlich die Magnet-Aufnahmetrichter 20. Bei der Verarbeitung von Drahtverschlüssen mit einer geringen Fläche für den Angriff des am Boden des Aufnahmetrichters befindlichen bzw. den Boden des Aufnahmetrichters darstellenden Permanentmagneten, insbesondere bei 4-Drahtverschlüssen ohne Deckel, und bei hoher Geschwindigkeit der Maschine kann es vorkommen, daß die Wirkung des Permanentmagneten nicht ausreicht, den Verschluß mit absoluter Sicherheit festzuhalten. Gemäß der erfindungsgemäßen Weiterbildung wird deshalb der Magnet-Aufnahmetrichter 20 zusätzlich mit einer mechanischen Halteklinke versehen, wie dies aus der Skizze von Fig. 5 hervorgeht. Dabei ist der Magnetaufnahmetrichter 20 an seiner vor Erreichen der Vereinzelungsvorrichtung nachlaufenden Wandung mit einem parallel zum Trichterboden verlaufenden Schlitz versehen, durch den teilweise ein Klinkenzylinder 50 hindurchgreift, der durch eine Feder 51 in Richtung in den Aufnahmetrichter hinein belastet ist. Bei seinem Vorbeigang unter der Vereinzelungsvorrichtung führt der Aufnahmetrichter 20 eine Schwenkbewegung durch, die ihn - wie vorab im einzelnen erläutert worden ist - aus einer voreilenden Schrägrichtung in eine nacheilende Schrägrichtung verschwenkt. In Fig. 5 ist dies durch die Positionen 20a, 20b und 20c des Aufnahmetrichters 20 dargestellt, wobei diese Positionen mit den entsprechenden Positionen 14a, 14b und 14c des vom Trichter 20 aufgenommenen Tragverschlusses 14 korrespondieren. Es ist ersichtlich, daß damit der Drahtverschluß 14 mit seinem Bodenrand an dem Klinkenzylinder 50 vorbei den Boden des Aufnahmetrichters 20, von welchem er ja magnetisch angezogen wird, ungehindert erreichen kann und dort dann - flach aufliegend - haftet. Ein senkrechtes Abziehen des Drahtverschlusses 14 aus dem Aufnahmetrichter 20 ist dann aber nicht mehr möglich, weil ja der Oberrand des Drahtverschlusses 14 hinter den Klinkenzylinder 50 greift, von diesem also mechanisch festgehalten wird. Die Übergabe des Drahtverschlusses 14 vom Trichter 20 auf die Kachel 28) wird jedoch von der Halteklinke 50, 51 nicht behindert. Dadurch, daß sich die endlose Kette 15 über der Abnahmeeinrichtung 12 schräg nach oben bewegt, wird der Drahtverschluß 14 von der Abnahmevorrichtung 12 an seiner voreilenden, also vom Klinkenzylinder 50 entfernten Oberkante angekippt und schräg aus dem Trichter 20 abgezogen, mit der Folge, daß der Klinkenzylinder 50 den Abziehvorgang nicht behindert. Zusammenfassend ist also zu sagen, daß die Klinkenvorrichtung ein unerwünschtes Herausfallen (bei schwacher Magnetwirkung) des Drahtverschlusses 14 aus dem Aufnahmetrichter 20 mechanisch verhindert, ohne jedoch das Einführen in den und das Abziehen aus dem Aufnahmetrichter zu stören.

## Ansprüche

1. Aufsetzvorrichtung zum Überführen von Drahtverschlüssen für verkorkte Flaschen, insbesondere Sektflaschen, von einem Drahtverschluß-Stangenmagazin auf Aufsetzkacheln einer in eine Flaschen-Verdrahtungsmaschine führende Förderkette, mit einem eine Vereinzelungseinrichtung enthaltenden Abgabekopf, der die vereinzelten Drahtverschlüsse auf eine Überführungseinrichtung gibt, und eine Abnahmeeinrichtung, welche die Drahtverschlüsse von der Überführungseinrichtung wieder abnimmt und auf die Kacheln setzt, wobei die Vereinzelungseinrichtung durch Hubzylinder betätigbare Drahtverschluß-Halteelemente und die Überführungseinrichtung ein umlaufendes Förderelement mit schwenkbar angelenkten Magnet-Aufnahmetrichtern aufweist, die im Bereich des Abgabekopfs einer gesteuerten Vorauseilungs- und Nacheilungs-Schwenkbewegung unterworfen werden, dadurch gekennzeichnet, daß die Vereinzelungseinrichtung aus einem einzigen Hubzylinder (30), zwei vom Hubzylinder (30) betätigten Schiebern (31, 32) und zwei, die Schieber (31, 32) miteinander verbindenden, Haltenadeln (35) tragenden Knickhebeln (33,34) besteht, daß das umlaufende Förderelement der Überführungseinrichtung (11) eine endlose Kette (15) mit im wesentlichen dreieckförmiger Umlaufbahn ist, deren Aufnahmetrichter (20) an Schwenkachsen (21) mit beidseits exzentrisch angebrachten Kurvenrollen (25,26) angelenkt sind, wobei abwechselnd eine Kurvenrolle (25;26) jeder Schwenkachse (21) in eine ihr zugeordnete Steuerkurvennut (23a;24a) eingreift, und daß die Abnahmeeinrichtung (12) über den Aufsetzkacheln (28) angeordnete Niederhalter-Bleche (27) aufweist, wobei im Übergabebereich zwischen Trichterkette (15) und Kachel-Förderkette ein sich öffnender Anstellwinkel besteht.

2. Aufsetzvorrichtung nach Anspruch 1, dadurch gekennzeichnet, daß die Kurvenrollen (25,26) über Hebel (19a, 19b) an der Schwenkachse (21) befestigt sind.

3. Aufsetzvorrichtung nach Anspruch 1 oder 2, dadurch gekennzeichnet, daß die Steuerkurvennuten (23a, 24a) in beidseits der Trichterkette (15) angeordneten Platten (23,24) eingeformt sind, deren Umrisse der Erstreckung der Steuerkurvennuten (23a, 23b) angepasst ist.

4. Aufsetzvorrichtung nach Anspruch 3, dadurch gekennzeichnet, daß die Umrisse der beiden Platten (23,24) kurze Überlappungsbereiche aufweisen.

5. Aufsetzvorrichtung nach einem der Ansprüche 1 - 4, dadurch gekennzeichnet, daß die Bahn der Trichterkette (15) in etwa die Form eines gleichseitigen Dreiecks aufweist, wobei die untere Basisseite gegenüber der Horizontalen einen kleinen Anstellwinkel besitzt.

6. Aufsetzvorrichtung nach Anspruch 5, dadurch gekennzeichnet, daß die Trichterkette (15) über drei Rollen (16) läuft, deren oberste motorisch angetrieben ist.

7. Aufsetzvorrichtung nach einem der Ansprüche 1 - 6, dadurch gekennzeichnet, daß die Enden der Knickhebel (33,34) der Vereinzelungseinrichtung in den Schiebern (31,32) verschiebbar gelagert sind.

8. Aufsetzvorrichtung nach Anspruch 7, dadurch gekennzeichnet, daß jeder Knickhebel (33,34) mit zwei Haltenadeln (35) ausgerüstet ist.

9. Aufsetzvorrichtung nach Anspruch 7 oder 8, dadurch gekennzeichnet, daß der pneumatische Hubzylinder (30) über seine Kolbenstange (30a) mit einem der beiden Schieber (31) verbunden ist.

10. Aufsetzvorrichtung nach einem der Ansprüche 1 - 9, dadurch gekennzeichnet, daß die beiden Niederhalter-Bleche (27) der Abnahmeeinrichtung (12) mit der Kachel-Förderkette mitbewegbar sind.

11. Aufsetzvorrichtung nach einem der Ansprüche 1 - 10, gekennzeichnet durch einen Annäherungsinitiator (29), der unmittelbar vor der Stelle der Übergabe der Drahtverschlüsse (14) vom Abgabekopf (10) auf die Überführungseinrichtung (11) angeordnet und mit der Flaschenzuführung der Flaschenverdrahtungsmaschine gekoppelt ist.

12. Aufsetzvorrichtung nach einem der Ansprüche 1 bis 11, dadurch gekennzeichnet, daß der Magnet-Aufnahmetrichter (20) mit einer mechanischen Halteklinke (50, 51) versehen ist.

13. Aufsetzvorrichtung nach Anspruch 12, dadurch gekennzeichnet, daß die Halteklinkeneinrichtung aus einem parallel zum Trichterboden an der nacheilenden Trichterseitenwand verlaufenden Klinkenzylinder (50) und einer den Klinkenzylinder belastenden Feder (51) besteht.

FIG.1

FIG.2

FIG.2A

FIG.3A

12

27

22

20

14

28

EP 0 366 955 A1

FIG.3B

FIG.4

FIG.4A

FIG.4B

# FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 478 614 (ETABLISSEMENTS F. VALENTIN) <br> * Seite 2, Zeile 38 - Seite 3, Zeile 31; Figur 1 * <br> --- | 1 | B 67 B    5/06 <br> B 67 B    3/062 <br> B 65 G   59/10 |
| A | DE-A-2 421 267 (OTTO SICK METALLWARENFABRIK) <br> * Figur 2 * <br> --- | 1 | |
| A | DE-A-1 966 353 (GANZHORN UND STIRN) <br> * Seite 6, Absatz 1; Figur 1 * <br> --- | 1 | |
| A | FR-A-1 548 315 (OTTO SICK METALLWARENFABRIK) <br> ----- | | |

RECHERCHIERTE SACHGEBIETE (Int. Cl.5)

B 67 B
B 65 B
B 65 G

Der vorliegende Recherchenbericht wurde für alle Patentansprüche erstellt

| Recherchenort | Abschlußdatum der Recherche | Prüfer |
|---|---|---|
| DEN HAAG | 05-02-1990 | SCHELLE, J. |